(19) Europäisches Patentamt
European Patent Office
Office européen des brevets

(11) EP 1 046 682 B1

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.7: **C09D 5/02**, C09D 133/06

(21) Anmeldenummer: **00108646.1**

(22) Anmeldetag: **20.04.2000**

(54) **Wässrige, pigmenthaltige Beschichtungsmittel**

Aqueous pigmented coating agents

Revêtements aqueux pigmentés

(84) Benannte Vertragsstaaten:
**DE ES FR IT NL SE**

(30) Priorität: **21.04.1999 DE 19918052**

(43) Veröffentlichungstag der Anmeldung:
**25.10.2000 Patentblatt 2000/43**

(73) Patentinhaber: **BASF Aktiengesellschaft
67056 Ludwigshafen (DE)**

(72) Erfinder:
- **Zhao, Cheng-Le
Charlotte, NC 28277 (US)**
- **Dittrich, Uwe
67061 Ludwigshafen (DE)**
- **Schwartz, Manfred
67227 Frankenthal (DE)**
- **Franzmann, Gernot
67273 Bobenheim (DE)**

(74) Vertreter: **Kinzebach, Werner et al
Patentanwälte,
Reitstötter, Kinzebach & Partner,
Ludwigsplatz 4
67059 Ludwigshafen (DE)**

(56) Entgegenhaltungen:
**EP-A- 0 010 000** **EP-A- 0 355 028**
**BE-A- 642 869** **DE-A- 4 318 083**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 046 682 B1

Printed by Jouve, 75001 PARIS (FR)

## Beschreibung

Die vorliegende Erfindung betrifft wässrige, im Wesentlichen lösungsmittelfreie, pigmenthaltige Beschichtungsmittel, die wenigstens eine Dispersion eines filmbildenden Polymeren P enthalten.

Pigmenthaltige, wässrige Beschichtungsmittel enthalten als Bindemittel für die Pigmentteilchen und die gegebenenfalls anwesenden Füllstoffe in der Regel ein filmbildendes Polymer in Form einer wässrigen Polymerdispersion. Die in der Polymerdispersion enthaltenen Polymerteilchen bilden beim Trocknen der Beschichtung einen Polymerfilm, der die Pigmentteilchen und die Füllstoffe bindet. Die Ausbildung eines gleichmäßigen Polymerfilms ist nur dann gewährleistet, wenn das Beschichtungsmittel bei Temperaturen oberhalb der Mindestfilmbildetemperatur (MFT = Temperatur oberhalb der das Polymer in dem Beschichtungsmittel einen Polymerfilm bildet) verarbeitet wird. Eine niedrige Mindestfilmbildetemperatur kann grundsätzlich durch Verwendung eines polymeren Bindemittels mit einer niedrigen Glasübergangstemperatur erreicht werden. Polymere Bindemittel mit einer niedrigen Glasübergangstemperatur haben jedoch den Nachteil, daß der Polymerfilm weich und klebrig ist. Dies hat wiederum eine geringe Blockfestigkeit und eine starke Anschmutzneigung der Beschichtung zur Folge. Konventionelle Beschichtungsmittel enthalten daher in der Regel ein Polymer mit einer höheren Glasübergangstemperatur und ein Filmbildehilfsmittel, das die Filmbildungstemperatur des Polymeren herabsetzt. Bei den Filmbildehilfsmitteln (Koaleszenzmitteln) handelt es sich in der Regel um flüchtige organische Verbindungen, beispielsweise um Lösungsmittel oder Weichmacher, die beim Trocknen der Beschichtung zunächst die Filmbildung erleichtern. Beim weiteren Trocknen werden die Filmbildehilfsmittel an die Umgebung abgegeben, wodurch sich die Oberflächenhärte des Polymerfilms erhöht und seine Klebrigkeit erniedrigt. Die Abgabe derartiger flüchtiger Substanzen an die Umgebung stellt jedoch eine starke Umweltbelastung dar. Es ist daher wünschenswert, Filmbildehilfsmittel und andere flüchtige Bestandteile in pigmenthaltigen, wässrigen Beschichtungsmitteln zu vermeiden.

Aus der US-5,530,056 und der US-5,610,225 sind Bindemittel für lösungsmittelfreie, wässrige Beschichtungsmittel bekannt, die spezielle Ester der Acrylsäure oder der Methacrylsäure mit Polyethylenglykolen (PEG-Monomere) einpolymerisiert enthalten. PEG-Monomere sind vergleichsweise teuer und in ihrer Wirkung nicht immer zufriedenstellend.

Die EP-A-327 006 beschreibt wässrige Polymerisatdispersionen, die in geringen Mengen Silanmonomere einpolymerisiert enthalten. Derartige Polymerdispersionen sind ebenfalls als Bindemittel für lösungsmittelarme Beschichtungsmittel geeignet. Bereits ein geringer Einbau von Silanmonomeren erhöht jedoch die Herstellungskosten für die Bindemittelpolymere in beträchtlichem Maße.

Aus der EP-A-609 756 und der EP-612 805 sind Bindemittel für lösungsmittelfreie Dispersionsfarben bekannt, die als Bindemittelpolymere Stufenpolymerisate aus einem harten und einem weichen Polymeren enthalten.

Die DE 196 21 574 beschreibt die Verwendung von Copolymerisaten vinylaromatischer Monomere mit Alkylacrylaten als Bindemittel in pigment- oder füllstoffhaltigen Beschichtungsmassen. Beschichtungen auf Basis der dort beschriebenen Bindemittel weisen insbesondere dann eine hohe Naßabriebfestigkeit auf, wenn das Bindemittelpolymer weniger als 1 Gew.-% saure Monomere einpolymerisiert enthält. Die so erhaltenen Beschichtungen weisen nur eine durchschnittliche Bewitterungsstabilität auf, insbesondere bei längerer Belastung mit UV-Strahlung.

Aus der US-3,320,198 ist bekannt, daß die Anschmutzneigung von Beschichtungen, die als polymeres Bindemittel ein Polyacrylat enthalten, durch Zugabe von Benzophenon in einer Menge von mehr als 0,3 Gew.-%, vorzugsweise 0,5 bis 3 Gew.-%, bezogen auf das polymere Bindemittel, verringert werden kann. Die dort beschriebenen Dispersionsfarben enthalten jedoch größere Mengen organischer Lösungsmittel. Aus der DE 38 27 975 sind ebenfalls Beschichtungsmittel bekannt, die Photoinitiatoren enthalten. In den Beispielen werden jedoch nur pigmentfreie Beschichtungsmittel mit wenigstens 0,4 Gew.-% Photoinitiator, bezogen auf das polymere Bindemittel beschrieben.

In der EP-A-599 676 werden als Bindemittel für Latexfarben wässrige Polymerdispersionen beschrieben, die polymerisierbare Derivate des Benzophenons einpolymerisiert enthalten. Der Einsatz derartiger Spezialmonomere erhöht ebenfalls die Kosten für das Bindemittel in beträchtlichem Maße.

Der vorliegenden Erfindung liegt somit die Aufgabe zugrunde, wässrige, pigmenthaltige Beschichtungsmittel bereitzustellen, die zu Beschichtungen mit guter Naßabriebfestigkeit und geringer Anschmutzneigung führen und die im wesentlichen frei sind von organischen flüchtigen Verbindungen wie Weichmachern und Lösungsmitteln. Dabei soll das Bindemittelpolymer ohne aufwendige Herstellungsverfahren oder den Einsatz kostenintensiver Spezialmonomere herstellbar sein. Die Beschichtungen sollen zudem insbesondere gegenüber Belastung mit UV-Strahlung, d.h. bei längerer Bewitterung stabil sein.

Es wurde überraschenderweise gefunden, daß pigmenthaltige Beschichtungsmittel, die im Wesentlichen frei sind von flüchtigen, organischen Verbindungen und deren Bindemittelpolymer im Wesentlichen aus Estern der Acrylsäure und/oder der Methacrylsäure aufgebaut ist, zu Beschichtungen mit einer geringen Anschmutzneigung und guter Bewitterungsstabilität führen, wenn das Beschichtungsmittel eine geringe Menge, jedoch weniger als 0,3 Gew.-%, bezogen auf das Polymer, eines nicht polymerisierbaren Photoinitiators enthält.

Demnach betrifft die vorliegende Erfindung wässrige, pigmenthaltige Beschichtungsmittel mit einer Pigmentvolumenkonzentration im Bereich von 25 bis 55 die im Wesentlichen frei sind von flüchtigen organischen Verbindungen, enthaltend:

(i) wenigstens eine wässrige, bei Raumtemperatur filmbildende Polymerdispersion wenigstens eines Polymeren P, das aufgebaut ist aus

- 80 bis 99,95 Gew.-% wenigstens eines Monomeren A, ausgewählt unter den Estern der Acrylsäure mit $C_2$-$C_{20}$-Alkanolen oder $C_5$-$C_{10}$-Cycloalkanolen und den Estern der Methacrylsäure mit $C_1$-$C_{20}$-Alkanolen oder $C_5$-$C_{10}$-Cycloalkanolen,

- 0,05 bis 10 Gew.-% wenigstens eines Monomeren B, ausgewählt unter ethylenisch ungesättigten Carbonsäuren, ethylenisch ungesättigten Sulfonsäuren oder ethylenisch ungesättigten Phosphonsäuren und deren Salzen, sowie

- 0 bis 20 Gew.-% eines oder mehrerer Monomere C, die von den Monomeren A und B verschieden sind,

(ii) wenigstens ein anorganisches Pigment und gegebenenfalls anorganische oder organische Füllstoffe,

(iii) 0,05 bis < 0,3 Gew.-%, bezogen auf das Polymer P wenigstens eines nicht polymerisierbaren Photoinitiators,

(iv) Wasser und übliche Hilfsmittel.

Die erfindungsgemäßen Beschichtungsmittel enthalten in der Regel weniger als 0,5%, vorzugsweise weniger als 0,1%, insbesondere weniger als 500 ppm und speziell weniger als 300 ppm flüchtige organische Verbindungen. Hierzu zählen organische Lösungsmittel, Weichmacher (organische Flüssigkeiten mit einem Siedepunkt oberhalb 250 °C) und - herstellungsbedingt - nicht polymerisierte Monomere (sogenannte Restmonomere). Die erfindungsgemäßen Beschichtungsmittel enthalten als flüchtige, organische Verbindungen vorzugsweise keine Zusätze wie Lösungsmittel oder Weichmacher, sondern ausschließlich herstellungsbedingte, flüchtige organische Verunreinigungen wie Restmonomere und deren Umwandlungsprodukte. Der Gehalt an Restmonomeren in den erfindungsgemäßen Beschichtungsmitteln liegt vorteilhafterweise unterhalb 300 ppm und insbesondere unterhalb 200 ppm.

Die Pigmentvolumenkonzentration PVK ist definitionsgemäß der mit 100 multiplizierte Quotient aus dem Gesamtvolumen der im Beschichtungsmittel enthaltenen Füllstoffe und Pigmente geteilt durch das Gesamtvolumen aus Füllstoffen, Pigmenten und Bindemittelpolymer, hier Polymer P.

Um eine gleichmäßige Filmbildung ohne Zusatz von Filmbildehilfsmitteln zu gewährleisten, ist es erforderlich, daß die Mindestfilmbildetemperatur (MFT) der Dispersion des Polymeren P unterhalb ihrer Verarbeitungstemperatur liegt. Vorzugsweise beträgt die Differenz zwischen Verarbeitungstemperatur und Mindestfilmbildetemperatur wenigstens 5 K und insbesondere wenigstens 10 K. Vorzugsweise wird die Mindestfilmbildetemperatur der wässrigen Dispersion des Polymeren P unterhalb 10°C und insbesondere unterhalb 5°C liegen. Als Mindestfilmbildetemperaturen gelten die in Anlehnung an DIN 53787 bestimmten Werte (siehe Ullmann's Enzyklopädie der Technischen Chemie, 4.Aufl. Bd.19, VCH Weinheim 1980, S. 17). Erfindungsgemäß erfolgt die Einstellung der MFT durch Wahl eines Polymeren P mit einer geeigneten Glasübergangstemperatur $T_G$. Die MFT einer wässrigen Dispersion eines Polymeren liegt in der Regel bis zu 15 K unterhalb seiner Glasübergangstemperatur $T_G$. Dementsprechend wählt man die Glasübergangstemperatur des Polymeren P vorzugsweise unterhalb 25°C und insbesondere unterhalb 15°C. Sofern erhöhte Verarbeitungstemperaturen möglich sind, beispielsweise in Regionen mit erhöhter Umgebungstemperatur, kann das Polymer P selbstverständlich auch eine höhere Glasübergangstemperatur, beispielsweise bis zu 30°C aufweisen. Vorzugsweise wird die Glasübergangstemperatur $T_G$ einen Wert von -25°C und insbesondere -10°C nicht unterschreiten, um eine hinreichende Härte und Festigkeit des Polymerfilms zu gewährleisten.

Der Begriff Glasübergangstemperatur meint in dieser Schrift die nach dem DSC-Verfahren (Differential Scanning Calorimetry, 20°C/min, midpoint) ermittelte Glasübergangstemperatur (vgl. ASTM D 3418-82).

Der Fachmann wird zur Einstellung der gewünschten $T_G$ bei der Herstellung des Polymeren P von einer geeigneten Monomermischung ausgehen. Nach Fox (T.G. Fox, Bull. Am. Phys. Soc. (Ser. II) 1, 123 [1956] und Ullmann's Enzyklopädie der technischen Chemie, 4. Auflage, Band 19, Verlag Chemie, Weinheim (1980), S. 17, 18) gilt nämlich für die Glasübergangstemperatur von Mischpolymerisaten bei großen Molmassen in guter Nährung

$$\frac{1}{T_G} = \frac{X^1}{T_G^{\,1}} + \frac{X^2}{T_G^{\,2}} + \cdots \frac{X^n}{T_G^{\,n}}$$

wobei $X^1$, $X^2$, ..., $X^n$ die Massenbrüche der Monomeren 1, 2, ..., n und $T_G{}^1$, $T_G{}^2$, ..., $T_G{}^n$ die Glasübergangstemperaturen der jeweils nur aus einem der Monomeren 1, 2, ..., n aufgebauten Polymeren in Grad Kelvin bedeuten. Quellen für tabellierte Glasübergangstemperaturen von Homopolymeren sind z.B. Ullmann's Encyclopedia of Industrial Chemistry, 5th ed., VCH, Weinheim, Vol. A 21 (1992) S. 169 und J. Brandrup, E.H. Immergut, Polymer Handbook 2nd ed, J. Wiley, New York 1975, pp 139-192.

Bei den erfindungsgemäßen, nicht polymerisierbaren Photoinitiatoren handelt es sich in der Regel um Verbindungen, die durch Einwirkung von Sonnenlicht eine Vernetzungsreaktion der Polymere P bewirken. Geeignet sind beispielsweise Verbindungen mit Diarylketonstruktur wie Benzophenon, Thioxanthon und deren Derivate. In diesen Verbindungen sind gegebenenfalls einer oder beide Phenylringe ein- oder mehrfach substituiert. Geeignete Substituenten sind $C_1$-$C_4$-Alkyl, z.B. Methyl, Hydroxy, $C_1$-$C_4$-Alkyloxy, Hydroxy-$C_1$-$C_4$-alkyl, Hydroxy-$C_1$-$C_4$-alkyloxy, Amino, $C_1$-$C_4$-Alkylamino, Nitro, Carboxyl, Carboxy-$C_1$-$C_4$-alkyl, z.B. Carboxymethyl, Acyloxy wie Acryloxy und Methacryloxy und Nitro. Geeignet sind auch Substituenten, die dem Photoinitiator eine erhöhte Wasserlöslichkeit verleihen. Derartige Substituenten weisen neutrale oder ionische Gruppen wie Trialkylammonium-, z.B. Triethylammonium-, Trimethylammoniumgruppen, Sulfonatgruppen, Carboxylatgruppen oder Polyalkylenoxidgruppen auf. Beispiele für solche Substituenten sind: Trimethylammoniummethyl, Trimethylammoniumpropyloxy, 2-Hydroxy-3-trimethylammonium (jeweils als Chlorid), Sulfomethyl, 3-Sulfopropyloxy.(jeweils als Natriumsalz) und $HO{(C_2H_4\text{-}O)}_n$-, mit n von 2 bis 100. Erfindungsgemäß bevorzugt sind Benzophenon und dessen Derivate. Besonders bevorzugt sind Benzophenonderivate, worin nur einer der Phenylringe Substituenten trägt, insbesondere solche, die nur einen Substituenten aufweisen und speziell solche, worin dieser Substituent sich in der 4-Position des Phenylrings befindet. Beispiele für besonders geeignete Derivate des Benzophenons sind 4-Methylbenzophenon, 4-Hydroxybenzophenon, 4-Aminobenzophenon, 4-Chlorbenzophenon, 4-Carboxybenzophenon, 4,4'-Dimethylbenzophenon, 4,4'-Dichlorbenzophenon, 4-Carboxymethylbenzophenon, 3-Nitrobenzophenon und 2,4,6-Trimethylbenzophenon. Geeignete Benzophenonderivate mit erhöhter Wasserlöslichkeit sind beispielsweise Benzophenon-4-methansulfonat, 3-(4-Benzoylphenoxy)propansulfonat, jeweils als Natriumsalz, 4-Benzoylbenzyltrimethylammoniumchlorid (= 4-(Trimethylammoniummethyl)benzophenon als Chlorid) und 2-Hydroxy-3-(4-benzoylphenoxy)propan-1-trimethylammoniumchlorid. Besonders bevorzugt wird Benzophenon als erfindungsgemäßer nicht polymerisierbarer Photoinitiator eingesetzt, wobei bei Raumtemperatur flüssige Mischungen aus Benzophenon und geeigneten Hilfssubstanzen ebenfalls anwendungstechnisch vorteilhaft sind. Beispiele für derartige flüssige Gemische sind 2,4,6-Trimethylbenzophenon/Benzophenon im molaren Verhältnis von 1,3:1 bis 1:1 oder 1-Hydroxycyclohexylphenylketon/Benzophenon z.B. im molaren Verhältnis 1:1. Derartige Mischungen sind unter anderem in der EP-A-209 831 beschrieben, auf die hier insoweit Bezug genommen wird. Erfindungsgemäß werden die Photoinitiatoren in einer Menge von weniger als 0,3 Gew.-%, bezogen auf das Polymer P, im Beschichtungsmittel, eingesetzt. Vorzugsweise liegt die eingesetzte Menge an Photoinitiator oberhalb 0,05 Gew.-% und insbesondere oberhalb 0,1 Gew.-%. Vorzugsweise beträgt sie bis zu 0,25 Gew.-%, bezogen auf das Polymer P. Insbesondere haben sich Einsatzmengen von etwa 0,1 bis 0,25 Gew.%, bezogen auf Polymer P, Benzophenon, gegebenenfalls als Abmischung mit 1-Hydroxy-1-benzoylcyclohexan bewährt.

Das erfindungsgemäß als Bindemittel dienende Polymer P ist im Wesentlichen, d.h. zu wenigstens 80 Gew.-%, bezogen auf das Gesamtgewicht des Polymeren P, aus Estern der Acrylsäure und/oder Estern der Methacrylsäure mit $C_1$-$C_{20}$-, vorzugsweise $C_1$-$C_{12}$- und insbesondere $C_1$-$C_8$-Alkanolen oder $C_5$-$C_{10}$-Cycloalkanolen aufgebaut (Monomere A). Geeignete $C_1$-$C_{20}$-Alkanole sind beispielsweise Methanol, Ethanol, n-Propanol, i-Propanol, 1-Butanol, 2-Butanol, i-Butanol, tert.-Butanol, n-Hexanol, 2-Ethylhexanol, Laurylalkohol und Stearylalkohol. Geeignete Cycloalkanole sind beispielsweise Cyclopentanol, Cyclohexanol, 4-tert-Butylcyclohexan-1-ol, 3,3,5-Trimethylcyclohexan-1-ol und Isoborneol. Bevorzugte Monomere A sind $C_1$-$C_4$-Alkylmethacrylate wie Methylmethacrylat, n-Butylmethacrylat, Isobutylmethacrylat, und tert-Butylmethacrylat, weiterhin $C_2$-$C_{10}$-Alkylacrylate wie Ethylacrylat, n-Butylacrylat, tert.-Butylacrylat, n-Hexylacrylat, n-Octylacrylat, 2-Ethylhexylacrylat, Decylacrylat und 2-Propylheptylacrylat.

Es hat sich erfindungsgemäß als vorteilhaft erwiesen, wenn die Monomere A, bezogen auf das Gesamtgewicht der Monomere A,

- 25 bis 55 Gew.-%, wenigstens eines Esters der Methacrylsäure mit einem $C_1$-$C_4$-Alkanol, insbesondere Methylmethacrylat, und
- 45 bis 75 Gew.-%, wenigstens eines Esters der Acrylsäure mit einem $C_2$-$C_{10}$-Alkanol, insbesondere n-Butylacrylat, 2-Ethylhexylacrylat oder Mischungen davon umfassen.

Die in den erfindungsgemäßen Beschichtungsmitteln eingesetzten Polymere P enthalten, bezogen auf ihr Gesmatgwicht, ferner 0,05 bis 10 Gew.-%, vorzugsweise 0,1 bis 5 Gew.-% und insbesondere 0,2 bis 3 Gew.-%, wenigstens eines Monomers B, ausgewählt unter ethylenisch ungesättigten Carbonsäuren, ethylenisch ungesättigten Sulfonsäuren, ethylenisch ungesättigten Phosphonsäuren und deren Salzen, insbesondere deren Natrium-, Kalium- und Ammoniumsalzen. Beispiele für ethylenisch ungesättigte Carbonsäuren sind monoethylenisch ungesättigte $C_3$-$C_8$-

Monocarbonsäuren wie Acrylsäure, Methacrylsäure, Crotonsäure, Vinylessigsäure, Acrylamidoglycolsäure und Methacrylamidoglycolsäure, ferner monoethylenisch ungesättigte $C_4$-$C_8$-Dicarbonsäuren wie Maleinsäure, Fumarsäure, Itakonsäure, und Citrakonsäure, weiterhin deren Halbester mit $C_1$-$C_{10}$-Alkanolen, wie Monomethylmaleinat und Mono-n-butylmaleinat. Beispiele für ethylenisch ungesättigte Sulfonsäuren sind Vinylsulfonsäure, 2-Acrylamido-2-methylpropansulfonsäure, 2-Acryloxyethansulfonsäure, 3-Acryloxypropansulfonsäure, Vinylbenzolsulfonsäure. Beispiele für geeignete Phosphonsäuren sind Vinylphosphonsäure, Allylphos-phonsäure und 2-Acrylamido-2-methylpropanphosphonsäure. Bevorzugte Monomere B sind Acrylsäure, Methacrylsäure und Itakonsäure. Für Beschichtungsmittel mit hoher Naßabriebfestigkeit hat sich bewährt, wenn die Monomere B, bezogen auf das Gesamtgewicht der Monomere B, wenigstens 50% Itakonsäure umfassen.

Neben den vorgenannten Monomeren A und B können die erfindungsgemäß zur Anwendung kommenden Polymere P bis zu 20 Gew.-%, bezogen auf das Gesamtgewicht des Polymeren P, Monomere C, die von den vorgenannten Monomeren A und B verschieden sind, enthalten.

Zu den Monomeren C zählen zum einen Monomere, die bei der radikalischen Emulsionspolymerisation ebenfalls zu Polymerlatices polymerisieren. Hierunter fallen insbesondere Vinylester aliphatischer Carbonsäuren wie Vinylacetat, Vinylpropionat und Vinylversatate sowie vinylaromatische Verbindungen wie Styrol.

Bevorzugte Monomere C sind neutrale Monomere mit einer erhöhten Wasserlöslichkeit, d.h. > 100 g/l (bei 25°C), die vorzugsweise in Mengen von bis zu 10 Gew.-%, z.B. 0,1 bis 5 Gew.-% eingesetzt werden. Hierzu zählen insbesondere die Amide der vorgenannten, monoethylenisch ungesättigten $C_3$-$C_8$-Monocarbonsäuren wie Acrylamid und Methacrylamid, weiterhin deren Hydroxyalkylester wie Hydroxyethylacrylat, Hydroxypropylacrylat, 4-Hydroxybutylacrylat und die entsprechenden Methacrylate, weiterhin wasserlösliche N-Vinyllactame, z.B. N-Vinylpyrrolidon. Besonders bevorzugte Monomere C sind Acrylamid und Methacrylamid.

Zu den Monomeren C zählen weiterhin solche Monomere, die Harnstoffgruppen aufweisen, z.B. N-Vinyl- und N-Allylharnstoff und Derivate des Imidazolidin-2-ons, z.B. N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on, N-[2-((Meth)acryloxyacetamido)ethyl]imidazolidin-2-on etc. Diese Monomere werden vorzugsweise in Mengen von bis zu 10 Gew.-%, insbesondere 0,5 bis 5 Gew.-%, bezogen auf das Gesamtgewicht des Polymeren P, verwendet. Derartige Monomere verbessern die Nasshaftung der aus den erfindungsgemäßen Zubereitungen erhältlichen Beschichtungen, d.h. die Haftung der Beschichtung in feuchtem oder gequollenem Zustand.

Zu den Monomeren C zählen weiterhin Siloxangruppen enthaltende Monomere, z.B. Vinyltrialkoxysilane, wie Vinyltrimethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan. Diese Monomere können in Mengen von bis zu 1 Gew.-%, vorzugsweise 0,05 bis 0,5 Gew.-%, bezogen auf die Gesamtmonomermenge, verwendet werden.

Ferner hat es sich als vorteilhaft erwiesen, wenn die Polymerisatteilchen in der Bindemittelpolymerisatdispersion einen gewichtsmittleren Polymerisatteilchendurchmesser im Bereich von 50 bis 1000 nm (bestimmt mittels Ultrazentrifuge oder Photonenkorrelationsspektroskopie; zur Teilchengrößenbestimmung mittels Ultrazentrifuge siehe z.B. W. Mächtle, Makromolekulare Chemie, 1984, Bd. 185, 1025-1039, W. Mächtle, Angew. Makromolekulare Chemie, 1988, 162, 35-42) aufweisen. Bei Bindemitteldispersionen mit hohen Feststoffgehalten, z.B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 100 nm ist. Der mittlere Teilchendurchmesser wird vorzugsweise 600 nm nicht überschreiten.

Die Herstellung der wässrigen Dispersionen des Polymeren P erfolgt erfindungsgemäß durch radikalische wässrige Emulsionspolymerisation der genannten Monomere A, B und gegebenenfalls C in Gegenwart wenigstens eines radikalischen Polymerisationsinitiators und gegebenenfalls einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z.B. Alkalimetallperoxodisulfate als auch um Azoverbindungen handeln. Als Polymerisationsinitiatoren werden häufig sog. Redoxinitiatoren verwendet, die aus wenigstens einem organischen Reduktionsmittel und wenigstens einem Peroxid und/oder Hydroperoxid zusammengesetzt sind, z.B. tert.-Butylhydroperoxid mit Schwefelverbindungen, z.B. dem Natriumsalz der Hydroxymethansulfinsäure, Natriumsulfit, Natriumdisulfit, Natriumthiosulfat oder Acetonbisulfit-Addukt oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Acetonbisulfit-Addukt, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1,0 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$), weiterhin Verbindungen der allgemeinen Formel I,

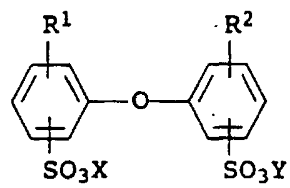

(I)

worin $R^1$ und $R^2$ Wasserstoff oder $C_4$-$C_{24}$-Alkyl, vorzugseise $C_8$-$C_{16}$-Alkyl bedeuten und nicht gleichzeitig Wasserstoff sind, und X und Y Alkalimetallionen und/oder Ammoniumionen sein können. Häufig werden technische Gemische verwendet, die einen Anteil von 50 bis 90 Gew.-% des monoalkylierten Produktes aufweisen, beispielsweise Dowfax® 2A1 ($R^1$ = $C_{12}$-Alkyl; DOW CHEMICAL). Die Verbindungen I sind allgemein bekannt, z.B. aus der US-A-4,269,749, und im Handel erhältlich.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxylierungsgrad von 8 bis 50. Bevorzugt werden anionische Emulgatoren. Insbesondere werden Kombinationen aus wenigstens einem anionischen und einem nichtionischen Emulgator oder Kombinationen zweier anionischer Emulgatoren bevorzugt.

weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Das Molekulargewicht der Polymere P kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Bei halbkontinuierlichen Verfahren wird die Hauptmenge, d.h. wenigstens 70 %, vorzugsweise wenigstens 90 % der zu polymerisierenden Monomere kontinuierlich, einschließlich Stufen- oder Gradientenfahrweise, dem Polymerisationsansatz zugeführt. Diese Vorgehensweise wird auch als Monomerzulaufverfahren bezeichnet. Unter Monomerzulauf versteht man flüssige Monomermischungen, Monomerlösungen oder insbesondere wäßrige Monomeremulsionen.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie Encyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,02 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Saatlatex kann auch in situ aus den zu polymerisierenden Monomeren erzeugt werden, indem man zunächst eine geringe Menge der zu polymerisierenden Monomere als wässrige Emulsion zusammen mit einem Teil der grenzflächenaktiven Substanz vorlegt, diese Emulsion auf Polymerisationstemperatur erwärmt und dann einen Teil des Initiators in einer Portion zugibt.

Polymerisationsdruck und Polymerisationstemperatur sind von untergeordneter Bedeutung. Im Allgemeinen

arbeitet man bei Temperaturen zwischen Raumtemperatur und 120°C, vorzugsweise bei Temperaturen von 40 bis 95°C und besonders bevorzugt zwischen 50 und 90°C.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423 aufgeführt sind, erfolgen. Bevorzugt wird die Nachpolymerisation mit einem Redoxinitiatorsystem aus wenigstens einem organischen Peroxid und einem organischen Sulfit durchgeführt.

Vorzugsweise werden die Dispersionen des Polymeren P vor ihrem Einsatz in den erfindungsgemäßen Zubereitungen, vorzugsweise duch Zugabe einer nichtflüchtigen Base, z.B. Alkalimetall- oder Erdalkalimetallhydroxiden oder nichtflüchtigen Aminen, auf einen pH-Wert im Bereich von pH 6 bis pH 10 eingestellt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die erfindungsgemäßen Zubereitungen Polymerisatdispersionen mit Feststoffgehalten im Bereich von 40 bis 70 Gew.-% bevorzugt. Besonders bevorzugt werden Dispersionen mit Polymergehalten von etwa 50 Gew.-%. Natürlich sind auch Dispersionen mit geringeren Feststoffgehalten prinzipiell für die erfindungsgemäßen Zubereitungen einsetzbar.

Erfindungsgemäß werden die Polymere P in Form ihrer wässrigen Polymerisatdispersionen als Bindemittel in solchen pigmenthaltigen Zubereitungen eingesetzt, die zur Beschichtung von Substraten dienen (pigmenthaltige Beschichtungsmittel). Hierunter versteht man beispielsweise Kunststoffdispersionsputze, Fliesenkleber, Anstrichmittel, Dichtmassen oder Versiegelungsmassen, insbesondere für poröse Bauteile.

Eine bevorzugte Ausführungsform der vorliegenden Erfindung betrifft Zubereitungen in Form von Dispersionsfarben, insbesondere für Aussenanwendungen. Die hieraus erhältlichen Beschichtungen zeichnen sich insbesondere durch eine besonders geringe Anschmutzneigung und eine hervorragende Witterungsstabilität aus.

Die erfindungsgemäßen Beschichtungsmittel, vorzugsweise die Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, und polymere Hilfsmittel. Davon entfallen etwa

i) 3 bis 90 Gew.-%, vorzugsweise 10 bis 60 Gew.-%, auf feste Bindemittelbestandteile (Polymer P)

ii) 5 bis 85 Gew.-%, vorzugsweise 10 bis 60 Gew.-%, auf wenigstens ein anorganisches Pigment, sowie 0 bis 85 Gew.-%, vorzugsweise 20 bis 70 Gew.-%, auf anorganische Füllstoffe,

iii) 0,05 bis < 0,3, vorzugsweise 0,1 bis < 0,3 Gew.-%, bezogen auf das Polymer P, wenigstens eines nicht polymerisierbaren Photoinitiators und

iv) 0,1 bis 40 Gew.-%, vorzugsweise 0,5 bis 15 Gew.-%, auf übliche Hilfsmittel,

wobei die Pigmentvolumenkonzentration PVK der Beschichtungsmittel erfindungsgemäß wenigstens 25 beträgt und 55 nicht überschreitet. In Beschichtungsmitteln in Form von Dispersionsfarben für Außenanwendungen liegt die PVK im Bereich von 25 bis 55. Dementsprechend beträgt das Gewichtsverhältnis von Polymer P zum Gesamtgewicht aus Pigmenten und Füllstoffen vorzugsweise wenigstens 2:1, insbesondere wenigstens 1,4:1 und in der Regel bis zu 1:8. Vorzugsweise liegt es im Bereich von 3:1 bis 1:5 und speziell im Bereich von 1,2:1 bis 1:3,5.

Typische Pigmente für die erfindungsgemäßen Zubereitungen, insbesondere für Dispersionsfarben, sind Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich Füllstoffmischungen besonders bewährt, z.B. Calciumcarbonat/Kaolin, Calciumcarbonat/Talkum.

Zur Erhöhung der Deckkraft und zur Einsparung von Weißpigmenten werden in den bevorzugten Dispersionsfarben häufig feinteilige Füllstoffe, z.B. feinteiliges Calciumcarbonat oder Mischungen verschiedener Calciumcarbonate mit unterschiedlichen Teilchengrößen eingesetzt. Zur Einstellung der Deckkraft, des Farbtons und der Farbtiefe werden vorzugsweise Abmischungen aus Farbpigmenten und Füllstoffen eingesetzt.

Zu den üblichen Hilfsmitteln iv) zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 0,6 Gew.-% bezogen auf das Gesamtgewicht der Dispersionsfarbe eingesetzt. Weiterhin umfassen die Hilfsmittel iv in der Regel auch Entschäumer, Konservierungs- oder Hydrophobiermittel, Biozide, Fasern oder weitere Bestandteile.

Ferner umfassen die Hilfsmittel iv) gegebenenfalls auch Verdickungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al. in J. Coatings Techn., Vol. 69, No. 867, 1997, S. 73 und von R.D. Hester et al. J. Coatings Technology, Vol. 69, No. 864, 1997, S. 109 beschrieben sind und auf deren Offenbarung hiermit in vollem Umfang Bezug genommen wird. Auch anorganische Verdikkungsmittel, z.B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet.

Die erfindungsgemäßen Beschichtungsmittel sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, gestrichene, grundierte oder verwitterte Untergründe. Das Aufbringen des Beschichtungsmittels auf das zu beschichtende Substrat erfolgt in einem von der Ausgestaltung der Zubereitung abhängigen Weise. Das Aufbringen kann, abhängig von Viskosität und Pigmentgehalt sowie dem Substrat mittels Rollen, Bürsten, Rakeln oder als Spray erfolgen. Die erfindungsgemäßen Beschichtungsmittel können sowohl als Deckfarbe für grundierte und für nicht grundierte Untergründe sowie als Grundierungsmittel verwendet werden, wobei letztere in der Regel einen geringeren Feststoffgehalt aufweisen.

Die erfindungsgemäßen Beschichtungsmittel zeichnen sich durch eine gute Witterungsstabilität und eine gute Naßabriebfestigkeit aus. Ihre Anschmutzneigung, insbesondere bei Anwendungen im Freien ist gegenüber konventionellen Beschichtungsmitteln auf der Basis weicher Bindemittel deutlich verbessert. Eine Verbesserung ergibt sich auch gegenüber konventionellen, lösungsmittelhaltigen Beschichtungsmitteln.

Die im Folgenden aufgeführten Beispiele sollen die Erfindung verdeutlichen, ohne sie jedoch einzuschränken.

I. Herstellung und Charakterisierung der Polymerisatdispersionen (Polymere P)

Die mittlere Teilchengröße (z-Mittelwert) der Polymerisatteilchen wurde durch dynamische Lichtstreuung (Photonenkorrelationsspektroskppie) an einer 0,01 gew.-%igen Dispersion in Wasser bei 23°C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Mindestfilmbildetemperatur (MFT) der Polymerisatdispersionen erfolgte in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet. Anhand des bekannten Temperaturprofils der Platte wird die MFT visuell bestimmt.

1. Dispersion D1

In einen Reaktor wurden 300 g entionisiertes Wasser, 3,56 g Emulgatorlösung 1, 1,6 g Itaconsäure und 64,7 g Monomeremulsion vorgelegt. Unter Stickstoffatmosphäre wurde auf 85°C erwärmt. Anschließend gab man 7,86 g wässrige Initiatorlösung zu. Danach gab man die restliche Monomeremulsion innerhalb von 3 Stunden und die verbleibende Initiatorlösung innerhalb von 3,5 Stunden zu. Nach Beendigung der Initiatorzugabe hielt man die Temperatur 1 Stunde bei und kühlte dann auf 60°C ab. Danach gab man 1,14 g tert.-Butylhydroperoxid (als 70 gew.-%ige, wässrige Lösung) und 0,64 g Natriumsalz der Hydroxymethansulfinsäure (gelöst in 2 g Wasser) über getrennte Zuläufe in den Reaktor. Man behielt die 60°C weitere 15 Minuten bei. Anschließend kühlte man auf Raumtemperatur und stellte den pH-Wert mit 10 gew.-%iger Natronlauge auf 7,6 ein. Die erhaltene Dispersion

war frei von Koagulat und wies einen Feststoffgehalt von 48,9 Gew.-% auf. Der gewichtsmittlere Teilchendurchmesser des Polymerisats lag bei 150 nm. Die MFT lag bei 0°C, die Glasübergangstemperatur bei 6,9°C (DSC, midpoint).

Initiatorlösung:

| | |
|---|---|
| 3,6 g | Natriumperoxodisulfat |
| 75,00 g | entionisiertes Wasser |

Monomeremulsion:

| | |
|---|---|
| 405,65 g | entionisiertes Wasser |
| 14,22 g | Emulgatorlösung 1 |
| 42,67 g | Emulgatorlösung 2 |
| 320,00 g | Methylmethacrylat |
| 480,00 g | n-Butylacrylat |
| 8,00 g | Acrylsäure |
| 24,00 g | einer 50 gew.-%igen wässrigen Acrylamid-Lösung |

Emulgatorlösung 1: 45 gew.-%ige Lösung von (Dodecylsulfonylphenoxy)benzolsulfonsäurenatriumsalz (Dowfax® 2A1 der Dow Chemicals) in Wasser

Emulgatorlösung 2: 15 gew.-%ige wässrige Natriumdodecylsulfat-Lösung

2. Dispersion D2

Dispersion D2 stellte man aus 200 Gewichtsteilen Dispersion D1 (Polymergehalt etwa 50 Gew.-%) durch Zugabe von 0,25 Gewichtsteilen einer Mischung aus Benzophenon und 1-Benzoyl-1-hydroxycyclohexan im Gewichtsverhältnis 1:1 her (0,25 Gew.-% Photoinitiatorabmischung, bezogen auf trockenes Polymer P).

3. Dispersion D3

In der für D1 beschriebenen Weise wurde mit geänderter Monomerzusammensetzung eine Dispersion D3 hergestellt. Die Vorlage enthielt 350 g entionisiertes Wasser, 3,3 g Emulgatorlösung 1 und 18,75 g Emulgatorlösung 3. Die Polymerisation wurde durch Zugabe von 10,19 g Initiatorlösung bei 85°C gestartet. Die Monomerzugabe erfolgte innerhalb 2,5 Stunden, die Zugabe der restlichen Initiatorlösung innerhalb 3 Stunden. Zur chemischen Desodorierung wurden 1,07 g tert.-Butylhydroperoxid und 0,6 g Natriumsalz der Hydroxymethansulfinsäure eingesetzt. Im Anschluss an die Polymerisationsreaktion wurde der pH-Wert mit 10 gew.-%iger Natronlauge auf einen Wert von 7,9 eingestellt. Die erhaltene Dispersion war frei von Koagulat und wies einen Feststoffgehalt von 50 Gew.-% auf. Der mittlere Teilchendurchmesser der Polymerisatteilchen lag bei 151 nm. Die MFT lag unterhalb 0°C, die Glasübergangstemperatur bei -2°C.

Initiatorlösung;

| | |
|---|---|
| 1,88 g | Natriumperoxodisulfat |
| 100,00 g | entionisiertes Wasser |

Monomeremulsion:

| | |
|---|---|
| 271,55 g | Wasser |
| 11,67 g | Emulgatorlösung 1 |
| 35,00 g | Emulgatorlösung 2 |
| 247,50 g | Methylmethacrylat |
| 502,50 g | n-Butylacrylat |
| 3,75 g | Acrylsäure |
| 3,75 g | Methacrylsäure |
| 22,50 g | 50 gew.-%ige wässrige Acrylamid-Lösung |

Emulgatorlösung 3: 20 gew.-%ige wässrige Lösung eines ethoxylierten $C_{16}$-$C_{18}$-Alkanols (18 EO-Einheiten)

4. Dispersion D4

Dispersion D4 stellte man aus 200 Gewichtsteilen Dispersion D3 (Polymergehalt etwa 50 Gew.-%) durch Zugabe von 0,25 Gewichtsteilen einer Mischung aus Benzophenon und 1-Benzoyl-1-hydroxycyclohexan im Gewichtsverhältnis 1:1 her (0,25 Gew.-% Photoinitiatorabmischung, bezogen auf trockenes Polymer P).

5. Dispersion D5

D5 ist eine kommerziell erhältliche, wässrige Polymerdispersion auf der Basis von n-Butylacrylat und Methylmethacrylat mit einem Feststoffgehalt von etwa 50 Gew.-%, einer Mindestfilmbildetemperatur von etwa 13 °C. Die gewichtsmittlere Teilchengröße der Polymerteilchen in der Dispersion liegt bei etwa 100 nm.

II. Herstellung der Beschichtungsmittel (Beispiel B1 und B2, Vergleichsbeispiel VB1)

Zur Herstellung der Beschichtungsmittel B1 und B2 wurden die Dispersionen D2 und D4 mit den folgenden Bestandteilen in der angegebenen Reihenfolge abgemischt.

| Zunächst wurden nacheinander unter Rühren | |
|---|---|
| 89 g | entionisiertes Wasser |
| 2 g | Dispergiermittel[1)] |
| 3 g | Konservierungsmittel[2)] |
| 4 g | wässrige Natriumpolyphosphatlösung (25 gew.-%ig) |
| 60 g | wässrige Verdickerlösung A (2 gew.-%ig)[3)] |
| 2 g | Entschäumer[4)] |
| 2 g | kaustisches Soda (20 gew.-%ig) |
| 157 g | Titandioxid[5)] |
| 182 g | Calciumcarbonat[6)] |
| 56 g | Talkum (5 µm) |
| zusammengegeben und 20 Minuten gemischt. Hierzu gab man unter Rühren | |
| 1 g | Entschäumer[4)] |
| 382 g | wässrige Polymerdispersion (ca. 50 gew.-%ig) |
| 50 g | wässrige Verdickerlösung B (5 gew.-%ig)[7)] und |
| 10 g | Wasser |

1) Pigmentverteiler S: 30 gew.-%ige Ammoniumpolyacrylat-Lösung (BASF Aktiengesellschaft)
2) Parmetol A26 der Schultze und Mayr GmbH, Norderstedt
3) wässrige Hydroxyethylcellulose-Lösung; Natrosol® 250HR; Hercules GmbH, Düsseldorf
4) Agitan® 280; Münzing Chemie GmbH, Heilbronn
5) Titanpigment-Rutiltyp; Kronos 2190 der Kronos Titan GmbH, Leverkusen
6) Omyacarb 5 GU; Omya GmbH, Köln
7) Acrysol® TT-935; Rohm & Haas Deutschland GmbH, Frankfurt.

Zu Vergleichszwecken wurde auf Basis der Dispersion D5 eine lösungsmittelhaltige Farbe VB1 formuliert. Diese enthielt die für B1 angegebenen Bestandteile in den dort angegebenen Mengen. Zusätzlich enthielt die Farbe, bezogen auf trockenes Polymer, 24 Gew.-% Testbenzin (Siedebereich 180 bis 210 °C) und 26 Gew.-% Weichmacher (LUSOLVAN® FBH der BASF AG).

III. Anwendungstechnische Prüfung

a) Herstellen der Beschichtungen

Hierzu wurde zunächst eine Mischung aus Wasser und Beschichtungsmittel im Volumenverhältnis 1:1 auf Faserzementplatten mit einer Bürste als Grundierung aufgetragen.Anschließend wurde die jeweilige Farbe unverdünnt aufgetragen (ca. 300 g/m$^2$ trockene Beschichtung). Die Beschichtung wurde zunächst 7 Tage getrocknet.

b) Die nach a) erhaltenen Probestücke wurden etwa 3 Jahre mitteleuropäischem Wetter ausgesetzt (Versuchsstation bei Ludwigshafen). Hierzu wurden die Faserzementplatten mit einer Neigung von 45° aufgestellt wobei die beschichtete Seite gegen Süden wies. Nach der Bewitterung wurden die Platten visuell sowie kolorimetrisch untersucht (kolorimetrische Bestimmung in Anlehnung an DIN 6174). Die kolorimetrische Prüfung erfolgte sowohl an einer ungereinigten Platte als auch an einer Platte, die zuvor mit einem nassen Schwamm abgewaschen worden war.

Bei der visuellen Prüfung wurden die Proben mit den Noten 0 bis 5 bewertet, wobei 0 für eine nicht sichtbare Verschmutzung steht und 5 für eine starke Verschmutzung (graue Oberfläche) steht. Die Ergebnisse sind in Tabelle 1 zusammengestellt.

Tabelle 1

| Schmutzaufnahme von Beschichtungen auf Basis der Beschichtungsmittel B1, B2 und VB1 | | | | |
|---|---|---|---|---|
| Beispiel | Dispersion | Schmutzaufnahme | | |
| | | visuell | kolorimetrisch[1)] | |
| | | | ungereinigt | gewaschen |
| B1 | D2 | 3 | 8,22 | 5,71 |
| B2 | D4 | 4 | 8,69 | 6,74 |
| VB1 | D5 | 4 | 11,99 | 7,01 |

[1)] $\Delta$ E Cielab (DIN 6174)

**Patentansprüche**

1. Wässrige, pigmenthaltige Beschichtungsmittel mit einer Pigmentvolumenkonzentration PVK im Bereich von 25 bis 55, die im Wesentlichen frei sind von flüchtigen, organischen Verbindungen, enthaltend:

   (i) wenigstens eine wässrige, bei Raumtemperatur filmbildende Polymerdispersion wenigstens eines Polymeren P, das aufgebaut ist aus

   - 80 bis 99,95 Gew.-% wenigstens eines Monomeren A, ausgewählt unter den Estern der Acrylsäure mit $C_2$-$C_{20}$-Alkanolen oder $C_5$-$C_{10}$-Cycloalkanolen und den Estern der Methacrylsäure mit $C_1$-$C_{20}$-Alkanolen oder $C_5$-$C_{10}$-Cycloalkanolen,

   - 0,05 bis 10 Gew.-% wenigstens eines Monomeren B, ausgewählt unter ethylenisch ungesättigten Carbonsäuren, ethylenisch ungesättigten Sulfonsäuren oder ethylenisch ungesättigten Phosphonsäuren und deren Salzen, sowie

   - 0 bis 20 Gew.-% eines oder mehrerer Monomere C, die von den Monomeren A und B verschieden sind,

   (ii) wenigstens ein anorganisches Pigment und gegebenenfalls anorganische oder organische Füllstoffe,

   (iii) 0,05 bis < 0,3 Gew.-%, bezogen auf das Polymer P wenigstens eines nicht polymerisierbaren Photoinitiators,

   (iv) Wasser und übliche Hilfsmittel.

2. Beschichtungsmittel nach Anspruch 1, enthaltend weniger als 0,1 Gew.-%, flüchtige, organische Verbindungen.

3. Beschichtungsmittel nach Anspruch 1 oder 2, worin der Photoinitiator ausgewählt ist unter Benzophenon und dessen Derivaten.

4. Beschichtungsmittel nach einem der vorhergehenden Ansprüche, worin die wässrige Dispersion des Polymeren P eine Mindestfilmbildetemperatur MFT unterhalb 10°C aufweist.

5. Beschichtungsmittel nach einem der vorhergehenden Ansprüche, wobei die Monomere A, bezogen auf das Gesamtgewicht der Monomere A

- 25 bis 55 Gew.-% wenigstens eines Esters der Methacrylsäure mit einem $C_1$-$C_4$-Alkanol und

- 45 bis 75 Gew.-%, wenigstens eines Esters der Acrylsäure mit einem $C_2$-$C_{10}$-Alkanol umfassen.

**6.** Beschichtungsmittel nach einem der vorhergehenden Ansprüche, worin die Monomere C ausgewählt sind unter den Amiden monoethylenisch ungesättigter Carbonsäuren.

**7.** Beschichtungsmittel, worin das Gewichtsverhältnis von Polymer P zu Gesamtmenge aus Pigment und Füllstoffen im Bereich von 2:1 bis 1:8 liegt.

**8.** Beschichtungsmittel nach einem der vorhergehenden Ansprüche in Form einer Dispersionsfarbe für Aussenanwendungen.

**9.** Verfahren zum Beschichten von Substraten, **dadurch gekennzeichnet, daß** man ein Beschichtungsmittel nach einem der Ansprüche 1 bis 8 auf das zu beschichtende Substrat aufbringt.

## Claims

**1.** An aqueous pigmented coating composition having a pigment volume concentration pvc in the range from 25 to 55 which is essentially free from volatile organic compounds and comprises:

(i) at least one aqueous room temperature film forming polymer dispersion of at least one polymer P which is composed of

- from 80 to 99.95% by weight of at least one monomer A selected from the esters of acrylic acid with $C_2$-$C_{20}$ alkanols or $C_5$-$C_{10}$ cycloalkanols and the esters of methacrylic acid with $C_1$-$C_{20}$ alkanols or $C_5$-$C_{10}$ cycloalkanols,

- from 0.05 to 10% by weight of at least one monomer B selected from ethylenically unsaturated carboxylic acids, ethylenically unsaturated sulfonic acids, ethylenically unsaturated phosphonic acids and their salts, and

- from 0 to 20% by weight of one or more monomers C which are different than the monomers A and B,

(ii) at least one inorganic pigment and, if appropriate, organic or inorganic fillers,

(iii) from 0.05 to $< 0.3\%$ by weight, based on the polymer P, of at least one nonpolymerizable photoinitiator,

(iv) water, and customary auxiliaries.

**2.** The coating composition according to claim 1, comprising less than 0.1% by weight of volatile organic compounds.

**3.** The coating composition according to claim 1 or 2, wherein said photoinitiator is selected from benzophenone and derivatives thereof.

**4.** A coating composition according to any of the preceding claims, wherein the aqueous dispersion of the polymer P has a minimum film-forming temperature MFT of less than 10°C.

**5.** The coating composition according to any of the preceding claims, wherein the monomers A comprise, based on their overall weight,

- from 25 to 55% by weight of at least one ester of methacrylic acid with a $C_1$-$C_4$ alkanol, and

- from 45 to 75% by weight of at least one ester of acrylic acid with a $C_2$-$C_{10}$ alkanol.

**6.** The coating composition according to any of the preceding claims, wherein the monomers C are selected from the amides of monoethylenically unsaturated carboxylic acids.

**7.** A coating composition wherein the weight ratio of polymer P to the total amount of pigment and fillers is within the range from 2:1 to 1:8.

**8.** The coating composition according to any of the preceding claims in the form of an emulsion paint for outdoor applications.

**9.** A method of coating substrates, which comprises applying a coating composition according to any of claims 1 to 8 to the substrate which is to be coated.

**Revendications**

**1.** Revêtements aqueux pigmentés, présentant une concentration volumique en pigment CVP de l'ordre de 25 à 55 et essentiellement exempts de composés organiques volatils, contenant :

(i) au moins une dispersion aqueuse de polymère, filmogène à la température ambiante, d'au moins un polymère P, constitué de :

- 80 à 99,95% en poids d'au moins un monomère A, choisi parmi les esters de l'acide acrylique avec des alcanols en $C_2$ à $C_{20}$ ou des cycloalcanols en $C_5$ à $C_{10}$, et les esters de l'acide méthacrylique avec des alcanols en $C_1$ à $C_{20}$ ou des cycloalcanols en $C_5$ à $C_{10}$,
- 0,05 à 10% en poids d'au moins un monomère B, choisi parmi des acides carboxyliques à insaturation éthylénique, des acides sulfoniques à insaturation éthylénique ou des acides phosphoniques à insaturation éthylénique et leurs sels, ainsi que
- 0 à 20% en poids d'un ou plusieurs monomères C, différents des monomères A et B,

(ii) au moins un pigment inorganique et le cas échéant des matières de remplissage inorganiques ou organiques,
(iii) 0,05 à moins de 0,3% en poids, par rapport au polymère P, d'au moins un photoinitiateur non polymérisable,
(iv) de l'eau et des adjuvants usuels.

**2.** Revêtements selon la revendication 1, contenant moins de 0,1% en poids de composés organiques volatils.

**3.** Revêtements selon la revendication 1 ou 2, dans lesquels le photoinitiateur est choisi parmi la benzophénone et ses dérivés.

**4.** Revêtements selon l'une quelconque des revendications qui précèdent, dans lesquels la dispersion aqueuse du polymère P présente une température minimale de formation de film TMF de moins de 10°C.

**5.** Revêtements selon l'une quelconque des revendications qui précèdent, dans lesquels les monomères A comprennent, par rapport au poids total des monomères A,

- de 25 à 55% en poids d'au moins un ester de l'acide méthacrylique avec un alcanol en $C_1$ à $C_4$ et
- de 45 à 75% en poids d'au moins un ester de l'acide acrylique avec un alcanol en $C_2$ à $C_{10}$.

**6.** Revêtements selon l'une quelconque des revendications qui précèdent, dans lesquels les monomères C sont choisis parmi les amides d'acides carboxyliques à insaturation monoéthylénique.

**7.** Revêtements dans lesquels la proportion pondérale du polymère P à la quantité totale de pigment et de matières de remplissage est de l'ordre de 2 : 1 à 1 : 8.

**8.** Revêtements selon l'une quelconque des revendications qui précèdent, sous la forme d'une peinture à dispersion pour applications extérieures.

**9.** Procédé de revêtement de substrats, **caractérisé en ce que** l'on applique un revêtement selon l'une quelconque des revendications 1 à 8 sur le substrat à revêtir.